# EUROPEAN PATENT APPLICATION

(11) **EP 2 055 459 A1**
(43) Date of publication of application: **06.05.2009**
(21) Application number: 07791694.8
(22) Date of filing: 31.07.2007
(51) Int. Cl.: B29C 45/14, B29L 31/58, B60R 21/20

(54) **PROCESS FOR MANUFACTURING LID PORTION OF VEHICLE AIRBAG**

(30) Priority: 25.08.2006 JP 2006229107
(71) Applicant: Calsonic Kansei Corporation, Saitama-shi Saitama 331-8501 (JP)
(72) Inventor: SAITOU, Kazuhiro, Saitama-shi (JP)
(74) Representative: Grünecker, Kinkeldey, Stockmair & Schwanhäusser Anwaltssozietät
(86) International application number: PCT/JP2007/065010
(87) International publication number: WO 2008/023545

(57) **Abstract**

A method of manufacturing an airbag lid section for a vehicle is disclosed wherein one of a core material (11) and an inner lid (13) is molded in a molding die assembly upon which molten resin for the other one of the core material and the inner lid is injected into the molding die assembly without causing the one of the core material and the inner lid to be removed from the molding die assembly after which the molten resin is solidified, whereby the core material (11) and the inner lid (13) are continuously molded in the molding die assembly while during the step of molding the inner lid (13), molten resin is injected with the intervening of wall surfaces of slide dies and subsequently solidified for thereby forming hinge portions integrally with the inner lid.

## Description

### TECHNICAL FIELD

The present invention relates to a method of manufacturing an airbag lid section installed on a vehicle such as a motor vehicle or the like.

### BACKGROUND OF THE INVENTION

In normal practice, a motor vehicle has a vehicle compartment having a front area in which an instrument panel, acting as a vehicular interior material, is mounted. The instrument panel has a front side on which a core material is located with an inner lid being bonded to the core material at a rear side thereof. In addition, the instrument panel has a given area in front of an assistant driver's seat in which an airbag lid section is provided to allow an airbag to bulge to projects into the vehicle compartment (see, for instance, Japanese Patent Application Publication No. 2004-161182). Moreover, an attempt has been made to develop a vehicle structure including a door trim that has a given position provided with an airbag lid section.

### DISCLOSURE OF INVENTION

However, with the related art set forth above, the airbag lid section is made of synthetic resin. Further, with the related art method of manufacturing the airbag lid section, the core material, placed on the front side, and the inner lid, placed on the rear side, are separately molded, after which the core material and the inner lid are bonded to each other by thermal fusion.

Accordingly, the related art process of manufacturing the airbag lid section results in a need to conduct three steps including a step of molding the core material, a step of molding the inner lid and a step of bonding the core material and the inner lid, causing a serious issue to arise with the occurrence of an increase in the number of processing steps with a drop in productivity.

Further, since the bonding step adopts vibration welding, ultrasound welding, high-frequency welding and bonding using adhesion bond, etc., an issue arises with an increase in a risk of causing bonding defects.

Therefore, it is an object of the present invention to provide a method of manufacturing an airbag lid section at high production efficiency with a lessened effect of suffering bonding defects.

As recited in claim 1, a method of manufacturing an airbag lid section for a vehicle comprises continuously molding a core material and an inner lid, both of which form an airbag lid section, with a molding die assembly by molding one of the core material and the inner lid with the molding die assembly and injecting molten resin for the other one of the core material and the inner lid into the molding die assembly with the one of the core material and the inner lid left intact within the molding die assembly upon which the molten resin is solidified, and during the step of molding the inner lid, injecting the molten resin with wall surfaces of slide dies being intervened and solidifying the same to allow hinge portions to be integrally formed with the inner lid, whereby the airbag lid section is formed with the core material and the inner lid, formed on the core material at a rear surface thereof, which has end portions contiguously formed with the hinge portions that protrude in a rearward direction of the core material.

With the method of manufacturing the airbag lid section for the vehicle recited in claim 2, the slide dies may be preferably provided in each pair for each of the hinge portions and placed such that wall surfaces of the slide dies have end portions held in abutting contact with each other and the wall surfaces are moved away from each other after the molten resin is solidified whereby the airbag lid section demolded from the molding die assembly.

With the method of manufacturing the airbag lid section for the vehicle recited in claim 3, the core material may preferably have airbag cleaving portions at which airbag cleaving recesses are integrally formed.

With the method of manufacturing the airbag lid section for the vehicle recited in claim 4, the core material may preferably have a surface integrally formed with stitch-sewing-like concave and convex patterns extending along the airbag cleaving recesses.

With the method of manufacturing the airbag lid section for the vehicle recited in claim 1, the core material and the inner lid are continuously molded in the molding die assembly. Therefore, the airbag lid section can be molded in a single continuous step without requiring the three steps including the step of molding the core material, the step of molding the inner lid and the step of bonding the core material and the inner lid as required in the related art manufacturing method.

Further, injecting molten resin with the intervening of the wall surfaces of the slide dies upon which molten resin is solidified allows the hinge portions to be formed integrally with the inner lid. This enables the hinge portions to be efficiently molded.

With the method of manufacturing the airbag lid section recited in claim 2, the wall surfaces of the slide dies are moved away from each other after molten resin is solidified. This enables the airbag lid section to be easily removed from the molding die assembly.

With the method of manufacturing the airbag lid section recited in claim 3, the airbag cleaving recesses are molded integrally with the airbag cleaving portions of the core material. This enables the airbag cleaving recesses to be easily molded.

With the method of manufacturing the airbag lid section recited in claim 4, the stitch-sewing-like concave and convex patterns can be easily molded.

### BRIEF DESCRIPTION OF THE DRAWINGS

FIG. 1 is a plan view showing an airbag lid section of an instrument panel of a first embodiment according to the present invention.
FIG. 2 is a cross-sectional view taken on line II-II of FIG. 1.
FIG. 3 is a perspective view showing a hinge area neighborhood of an inner lid of the first embodiment according to the present invention.
FIG. 4 is a cross-sectional view showing a status in which the airbag lid section, shown in FIG. 2, is deployed.
FIG. 5 is a cross-sectional view of an internal part of a molding die assembly representing a process of manufacturing an instrument panel of the first embodiment according to the present invention.
FIG. 6 is a schematic view representing a process of manufacturing an inner lid shown in FIG. 5 in a simplified form.
FIG. 7 is a schematic view representing a process of manufacturing a core material shown in FIG 5 in a simplified form.
FIG. 8 is a schematic view representing a process of demolding an instrument panel shown in FIG. 5 in a simplified form.
FIG. 9 is a schematic view representing a process of demolding the instrument panel shown in FIG. 5 in a simplified form.
FIG. 10 is a plan view showing an airbag lid section of an instrument panel of a second embodiment according to the present invention.
FIG. 11 is a plan view showing a detail of a section Y of FIG. 10.
FIG. 12 is a cross-sectional view taken on line XII-XII of FIG. 1.
FIG. 13 is a cross-sectional view of a molding device of a core back system of another embodiment according to the present invention.
FIG. 14 is a cross-sectional view showing a case where the inner lid of the first embodiment according to the present invention has hinge area neighborhoods provided with engagement segments.

### BEST MODE FOR CARRYING OUT THE INVENTION

Hereunder, embodiments of the present invention will be described below with reference to the accompanying drawings.

### (First Embodiment)

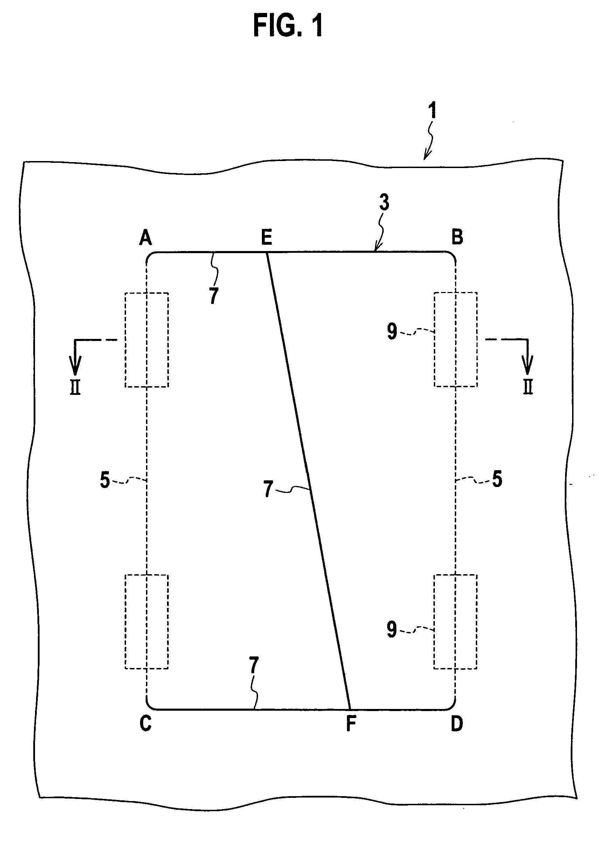

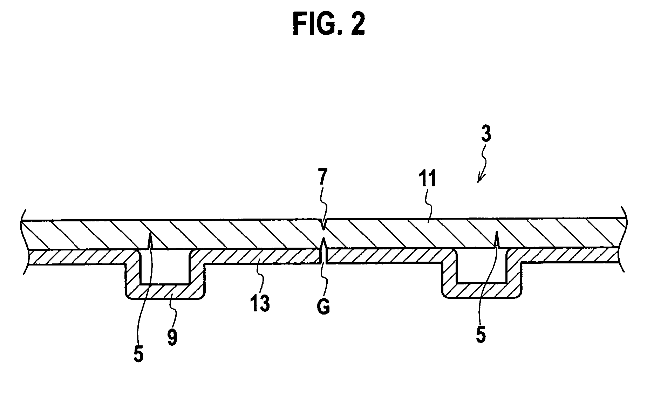

FIG. 1 is a plan view showing an airbag lid section of an instrument panel of a first embodiment according to the present invention and FIG. 2 is a cross-sectional view taken on line II-II of FIG. 1.

A vehicle compartment internally has a front portion at which the instrument panel is disposed in a vehicle widthwise direction. The instrument panel has an area, facing an assistant driver's seat, which incorporates an airbag device (not shown) operative during a collision of a vehicle. The area of the instrument panel 1 has an airbag lid section 3 formed at a position corresponding to the airbag device for the assistant driver's seat as shown in FIG 1. Also, the present invention is not limited to such an instrument panel 1 and the airbag device and the airbag lid section 3 may also be mounted on, for instance, a door trim.

In FIG 1, the airbag lid section 3 is provided in a rectangular shape with corners A, B, C and D being connected to each other. At a linear portion shown in FIG 1, the airbag lid section 3 has surfaces formed with airbag cleaving recesses 7, respectively, each having a V-shape in cross section (see FIG. 2). That is, line segments AB, CD and EF, shown in solid lines, respectively, represent the airbag cleaving recesses 7 and line segments AC and BD, shown by broken lines, respectively, represent hinge cleaving recesses 5.

As shown in FIG. 2, the hinge cleaving recesses 5 are formed on a core material 11 only at a rear surface thereof and the airbag cleaving recesses 7 are formed on both of front and rear surfaces of the core material 11. In addition, four rectangular portions, indicated by broken lines, represent hinge portions 9 that are located at corner areas of the airbag lid section 3.

As shown in FIG. 2, the airbag lid section 3 has a front side (in an upper area in FIG. 2), in which the core material 11 is located, and a rear side (in a lower area in FIG. 2) in which an inner lid 13 is directly bonded to the core material 11. Moreover, the core material 11 has a central area in a lateral direction of FIG. 2 at which the airbag cleaving recesses 7 are formed along the line segment EF shown in FIG. 1. As set forth above, moreover, the airbag cleaving recesses 7 are formed on the corer material 11 at the front and rear surfaces in a V-shape and a reversed V-shape, respectively, and the hinge cleaving recesses 5 are formed only on the rear side of the core material 11 in a reversed V-shape in cross section.

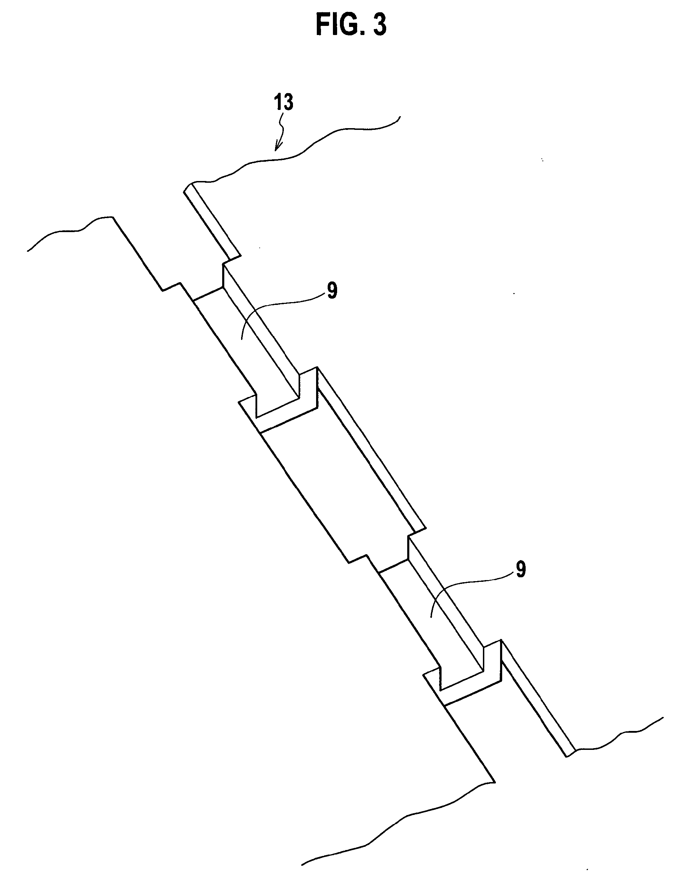

As shown in FIG. 2, meanwhile, the inner lid 13 has an area partitioned left and right with a given gap G at a position opposite to the airbag cleaving recesses 7 of the corer material 11. As shown in FIGS. 2 and 3, further, the inner lid 13 has areas including hinge portions 9, each having a C-shape in cross section, which are formed at positions opposite to the hinge cleaving recesses 5.

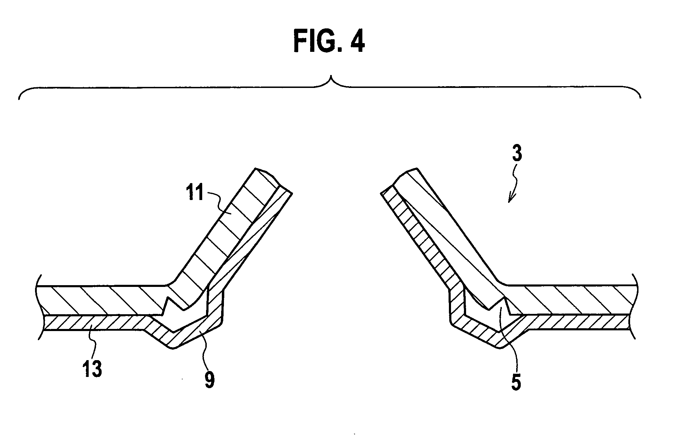

A sequence in which the airbag lid section 3 of the present embodiment is opened will be described with reference to FIG. 4.

Under a normal state, as shown in FIG. 2, the airbag lid section 3, composed of the core material 11 and the inner lid 13, is formed in a flat shape.

Upon actuation of the airbag device (not shown), subsequently, an airbag (not shown) is caused to bulge to press the airbag lid section 3 at the rear side thereof. Then, the airbag cleaving recesses 7 of the corer material 11 are cleaved to press the airbag lid section 3 upward, which is consequently opened. Here, the inner lid 13 is longer in circumferential length than the core material 11 by portions equivalent to the hinge portions 9 and, hence, the airbag lid section 3 can be smoothly opened.

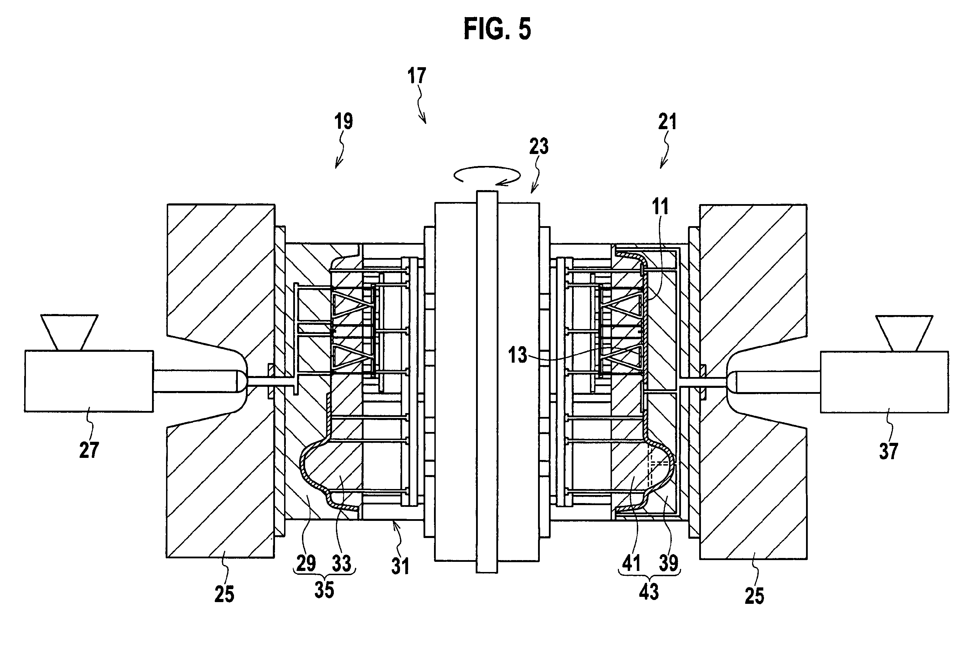

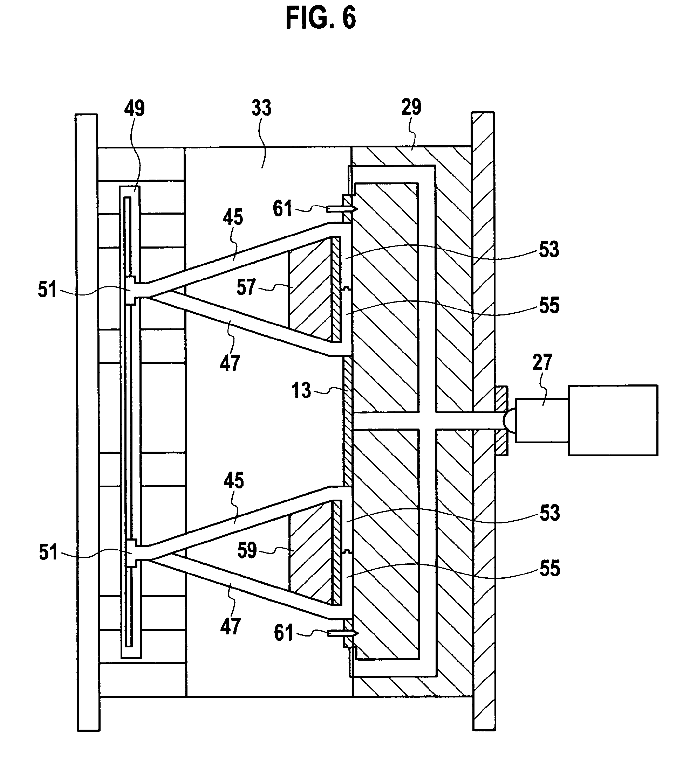

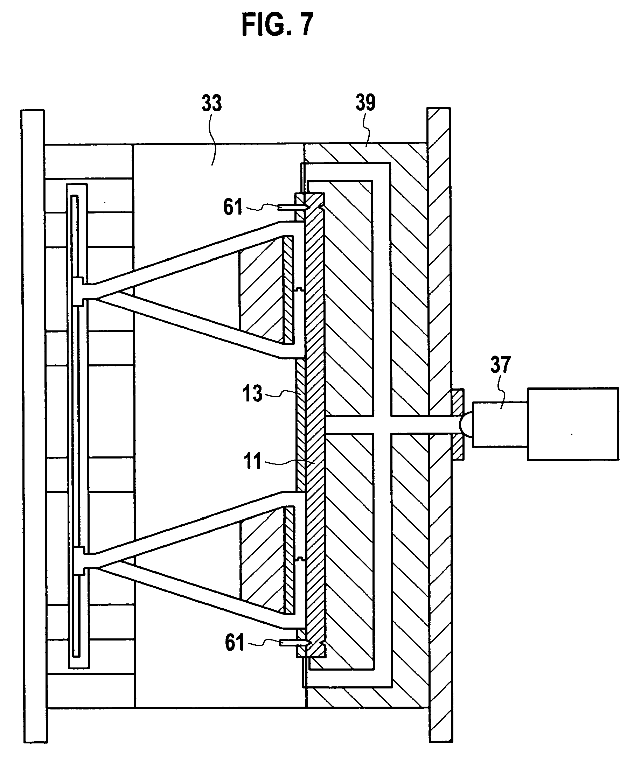

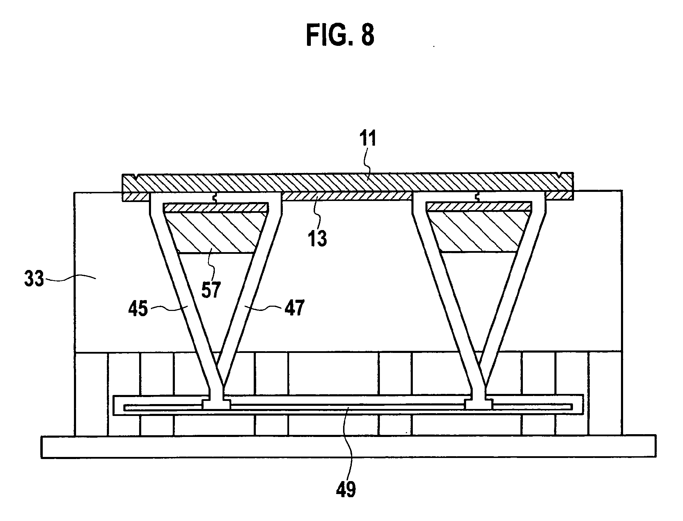

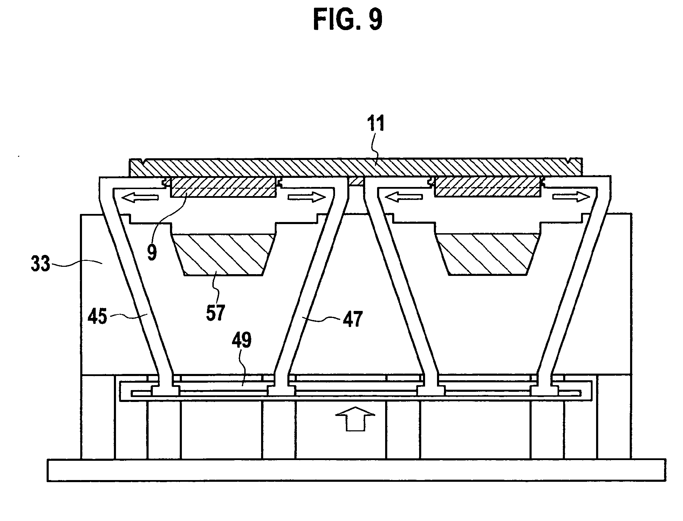

Next, a sequence of molding the airbag lid section according to the present embodiment will be described below with reference to FIGS. 5 to 8. FIG. 5 is a cross-sectional view of an internal part of a molding die assembly showing a process of manufacturing the instrument panel of the first embodiment according to the present invention; FIG. 6 is a schematic view showing a process of manufacturing the inner lid, shown in FIG. 5, in a simplified form; FIG. 7 is a schematic view showing a process of manufacturing the core material, shown in FIG. 5, in a simplified form; and FIGS. 8 and 9 are schematic views showing a process of demolding the instrument panel, shown in FIG. 5, in a simplified form.

First, the process of manufacturing the airbag lid section 3 is simply described.

After the inner lid 13 is injection molded in advance, the core material 11 is formed on the inner lid 13 at the front surface thereof with the airbag cleaving recess 7 and the hinge cleaving recesses 5 being formed on the core material 11. Further, it may suffice for the core material 11 to be formed in advance and, thereafter, the inner lid 13 to be formed on the core material 11 at the rear surface thereof. Hereunder, description will be made with reference to the accompanying drawings.

As shown in FIG. 5, the airbag lid section 3 of the present embodiment is employed as a constructional element of the instrument panel 1. A molding device 17 includes an inner lid molding jig 19, located on a left side in FIG. 5, a core material molding jig 21 located on a right side, and a rotary jig 23 located at a central side.

The inner lid molding jig 19 includes one support member 25 having one side, to which an inner lid injection unit 27 is mounted, and the other side to which an inner lid stationary die 29 is mounted. An inner lid movable jig 31 is mounted the rotary jig 23. The inner lid stationary die 29 and an inner lid movable die 33 of the inner lid movable jig 31 form an inner lid molding die assembly 35.

Meanwhile, the core material molding jig 21 includes the other support member 25 having one side, to which a core material injection unit 37 is mounted, and the other side to which a core material stationary die 39 is mounted. The core material stationary die 39 and a core material movable die 41 form a core material molding die assembly 43.

As shown in FIG. 6, further, the inner lid stationary die 29 includes slide dies 45 and 47 placed in pairs having nearly L-shape configurations for molding the hinge portions 9. The slide dies 45 and 47 have one ends, formed with engaging end portions 51 held in sliding engagement with a slide rail 49 to slide on the slide rail 49 along a longitudinal direction thereof, and the other ends formed with wall surfaces 53 and 55 in abutting engagement with the inner lid stationary die 29. Molten resin is injected to cavities defined between the wall surfaces 53 and 55 and the support segments 57 and 59 of the inner lid movable die 33, thereby forming the hinge portions 9 on the inner lid 13. In addition, the core material molding jig 21, shown in FIG. 7, also has the same structure as that of the inner lid molding jig 19.

A sequence of molding the airbag lid section 3 with the use of the molding die assembly having such a structure mentioned above will be described below.

As shown in FIG. 6, first, the inner lid injection unit 27 injects melted resin into the cavities defined between the inner lid movable die 33 and the inner lid stationary die 29 and the cavities defined between the support segments 57 and 59 of the inner lid movable die 33 and the wall surfaces 53 and 55 of the slide dies 45 and 47, thereby causing the inner lid 13 to be formed. At the same time, recess forming jigs 61 form gaps G (see FIG. 2) on the inner lid 13.

Here, the wall surfaces 53 and 55 of the slide dies 45 and 47 have distal ends held in abutting contact with each other. When the rotary jig 23, shown in FIG. 5, is caused to rotate, the inner lid movable die 33 and the core material stationary die 39 are brought into abutting contact with each other as shown in FIG. 7. Under such a state, if molten resin is injected from the core material injection unit 37 into the cavities for forming the core material 11, the core material 11 is integrally formed with the inner lid 13, thereby forming the airbag lid section 13. In addition, simultaneously with the formation of the core material 11, the recess forming jigs 61 form the airbag cleaving recesses 7 and the hinge cleaving recesses 5.

As shown in FIGS. 8 and 9, subsequently, the slide dies 45 and 47 in pairs are caused to slide away from each other and the slide rail 49 and the slide dies 45 and 47 are caused to move rightward, i.e., in a direction toward a molding surface of the inner lid movable die 33. This allows the airbag lid section 13 to be removed from the inner lid movable die 33. Thus, the constructional element of the instrument panel 1 is formed.

Further, although the present invention is not particularly limited to molten resin for the inner lid 13 to be formed, it is preferable to use a material excellent in low-temperature brittle-resistance characteristic and high-temperature brittle-resistance characteristic. The material may preferably include, for instance, olefinic elastomer composed of PP blended with synthetic rubber (EP and EPDM) or the like, and elastomer such as TEO, TPO and polyester elastomer TPEE, etc.

Furthermore, although the present invention is not particularly limited to molten resin for the core material 11 to be formed, it is preferable to use a material excellent in low-temperature brittle-resistance characteristic and high-temperature brittle-resistance characteristic. The material may preferably include, for instance, PP, ABS, PPO, PEO, PC/ABS and AS or the like to which a filler (any one of or a randomly mixed blend of talc, mica, shell meal, carbon fiber, aramid fiber and kenaf fiber) and synthetic rubber (EP and EPDM) or the like are added.

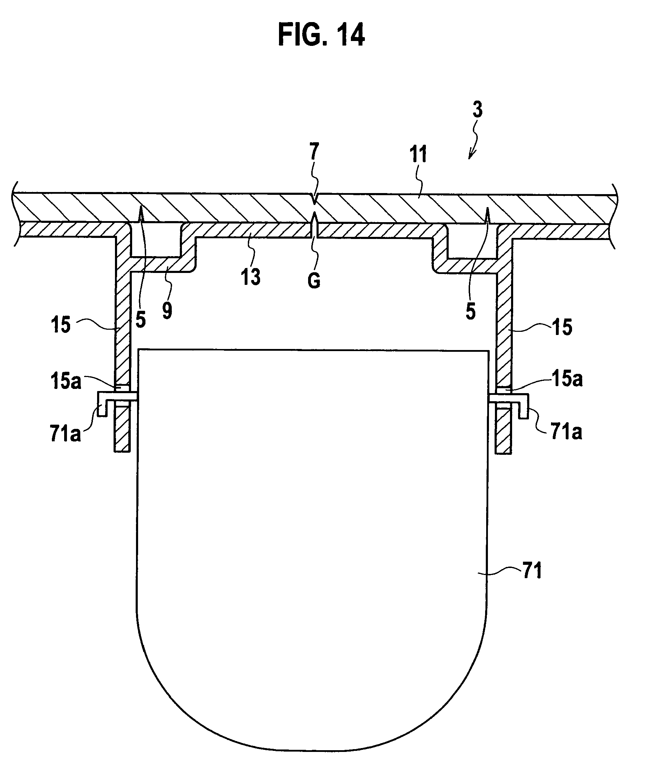

As shown in FIG. 14, moreover, the inner lid 13 may be internally provided with protruding support segments 15 formed with engagement holes 15a, respectively, to which engagement claws 71a, protruding from an airbag unit 71, are clamped.

### [Second Embodiment]

Next, a second embodiment of the present invention will be described with description of the same content as that of the first embodiment being omitted herein.

An airbag lid section of the present embodiment takes the form of a structure in which stitch-sewing-like concave and convex patterns are conducted along inner peripheries of the airbag cleaving recesses, respectively.

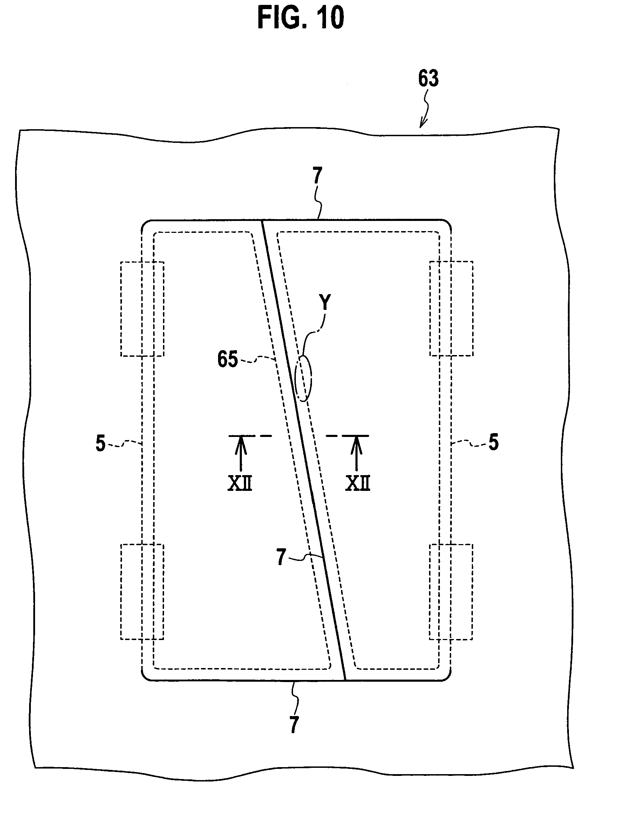

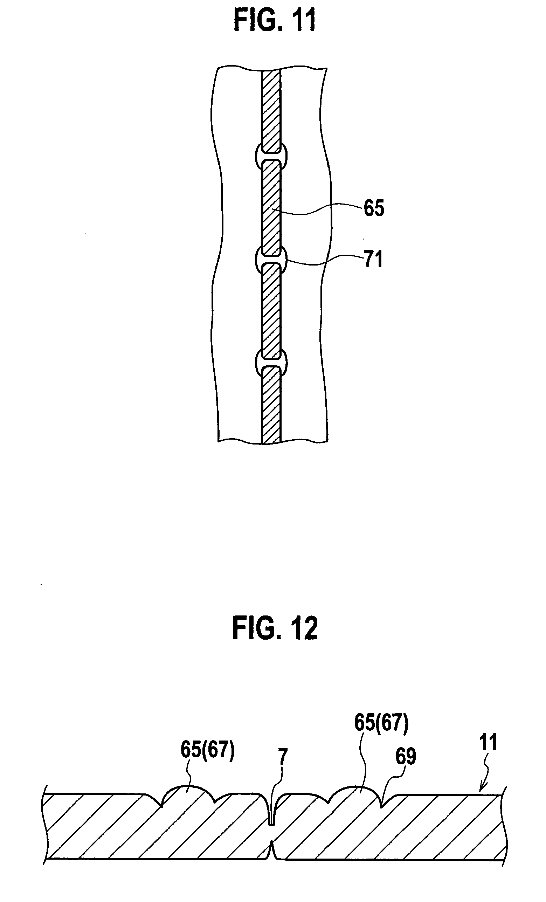

FIG. 10 is a plan view showing the airbag lid section of an instrument panel of a second embodiment according to the present invention; FIG. 11 is a plan view showing a detail of a Y-section in FIG. 10; and FIG. 12 is a cross-sectional view taken on line XII-XII of FIG. 10.

With a structure shown in FIG. 10, as described with reference to the first embodiment, an airbag lid section 63 includes a core material having a rear surface formed with hinge cleaving recesses 5 (indicated by broken lines). Airbag cleaving recesses 7 (indicated by solid lines) are formed on the core material at the rear surface and a front surface thereof. The hinge cleaving recesses 5 and the airbag cleaving recesses 7 have inward circumferential areas formed with stitch-sewing-like concave and convex patterns 65 extending in lengthy configurations along the hinge cleaving recesses 5 and the airbag cleaving recesses 7, respectively.

As shown in FIGS. 11 and 12, the concave and convex patterns 65 include convexed portions 67, each integrally formed on the core material 11 in a hemispherical shape in cross section, and concaved recesses 69 formed on the core material 11 at both left and right sides of the convexed portions 67, respectively. As shown in FIG. 11, further, the convexed portions 67 and the concaved recesses 69 are divided into pluralities of pieces so as to interconnect plurality of nearly circular concaved portions to each other.

Further, the present invention is not limited to the embodiments described above and it may be possible to implement various modifications in light of technical concepts of the present invention.

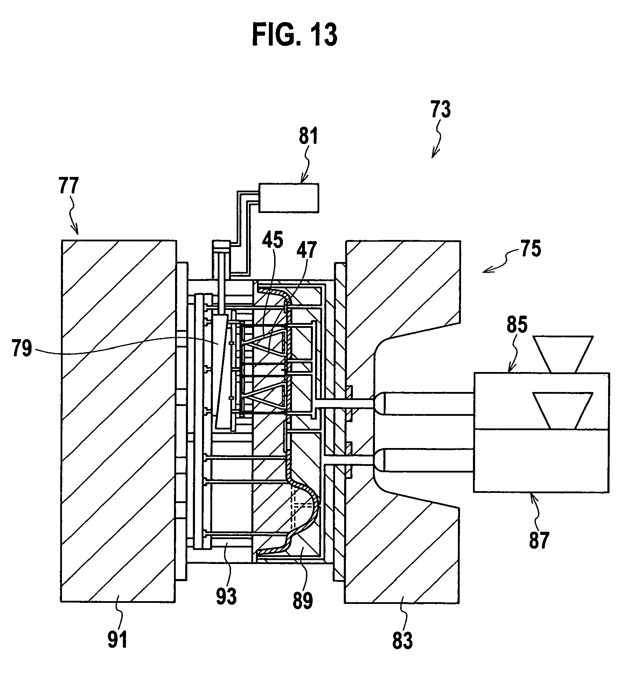

With the first embodiment, for instance, although the airbag lid section 3 is molded using the molding device 17 of the rotary type in which the inner lid molding jig 19 and the core material molding jig 21 are caused to rotate, use may be made of a molding device of a core-back system shown in FIG. 13.

FIG. 13 is a cross sectional view of the molding device of the core-back system of another embodiment according to the present invention.

The molding device 71 includes a stationary unit 75 disposed on a right side in the drawing figure, a movable unit 77 disposed on a left side, and an actuating device 81 actuating a core slide 79 of the movable unit 77.

With the stationary unit 75, a stationary platen 83 has one side on which two injection units 85 and 87 are mounted and the other side on which a stationary die 89 is mounted. With the movable unit 77, further, a movable die 93 is mounted on a movable platen 91 and carries slide dies 45 and 47 for the inner lid 13. The slide dies 45 and 47, having the same structures as those adopted in the first embodiment mentioned above, adopts the actuating device 81, using a hydraulic pressure, as means for moving a slide rail and the slide dies in a lateral direction as viewed in FIG. 13.

The molding device operates in sequence as simply described below.

First, as the actuating device 81 moves the core slide 79 to a lower position, the slide rail and the slide dies are moved rightward, causing the slide dies 45 and 47 to be brought into abutting contact against an inner surface of the stationary die 89. Under such a state, the inner lid injection unit 85injects molten resin into the cavity, thereby forming the inner lid 13.

Next, as the actuating device 81 is operated to move the core slide upward, the slide rail and the slide dies are moved leftward, causing wall surfaces of the slide dies 45 and 47 to be separated from the inner surface of the stationary die 89. Under such a state, a core material injection unit 87 injects molten resin into the cavity, thereby causing the core material 11 to be integrally formed on the inner lid 13 at a front surface thereof. In addition, the inner lid 13 is integrally formed with the hinge portions 9.

Further, although with the embodiments mentioned above, the hinge portions 9 have been formed in the nearly C-shapes in cross section as shown in FIG. 2, the present invention is not limited thereto and the hinge portions 9 may take other shapes such as U-shape, V-shape or semicircular shapes in cross section.

## Claims

1. A method of manufacturing an airbag lid section for a vehicle, the method comprising:
continuously molding a core material and an inner lid, both of which form an airbag lid section, with a molding die assembly by molding one of the core material and the inner lid with the molding die assembly and injecting molten resin for the other one of the core material and the inner lid into the molding die assembly with the one of the core material and the inner lid left intact within the molding die assembly upon which the molten resin is solidified; and
during the step of molding the inner lid, injecting the molten resin with wall surfaces of slide dies being intervened and solidifying the same to allow hinge portions to be integrally formed with the inner lid;
whereby the airbag lid section is formed with the core material and the inner lid, formed on the core material at a rear surface thereof, which has end portions contiguously formed with the hinge portions that protrude in a rearward direction of the core material.

2. The method of manufacturing the airbag lid section for the vehicle according to claim 1, wherein:
the slide dies are provided in each pair for each of the hinge portions and placed such that wall surfaces of the slide dies have end portions held in abutting contact with each other and the wall surfaces are moved away from each other after the molten resin is solidified whereby the airbag lid section demolded from the molding die assembly.

3. The method of manufacturing the airbag lid section for the vehicle according to claim 1, wherein:
the core material has airbag cleaving portions at which airbag cleaving recesses are integrally formed.

4. The method of manufacturing the airbag lid section for the vehicle according to claim 3, wherein:
the core material has a surface integrally formed with stitch-sewing-like concave and convex patterns extending along the airbag cleaving recesses.
